Europäisches Patentamt

European Patent Office

Office européen des brevets

(11) Veröffentlichungsnummer: **0 251 989 B1**

(12) **EUROPÄISCHE PATENTSCHRIFT**

(45) Veröffentlichungstag der Patentschrift: **18.09.91**

(21) Anmeldenummer: **87730067.3**

(22) Anmeldetag: **16.06.87**

(51) Int. Cl.⁵: **B29C 51/26**

(54) **Spannrahmen zum lösbaren Einspannen einer Folie.**

(30) Priorität: **23.06.86 DE 3620954**

(43) Veröffentlichungstag der Anmeldung:
**07.01.88 Patentblatt 88/01**

(45) Bekanntmachung des Hinweises auf die
Patenterteilung:
**18.09.91 Patentblatt 91/38**

(84) Benannte Vertragsstaaten:
**AT BE CH DE ES FR GB IT LI LU NL SE**

(56) Entgegenhaltungen:
**DE-A- 1 946 051      DE-A- 2 006 428
DE-A- 2 011 178      DE-A- 2 404 355
US-A- 3 659 991      US-A- 3 827 683**

(73) Patentinhaber: **J. H. Benecke AG
Beneckeallee 40
W-3000 Hannover 1(DE)**

(72) Erfinder: **Mente, Kurt
Jürgenweg 6
W-3000 Hannover 21(DE)**

(74) Vertreter: **Thömen, Uwe, Dipl.-Ing.
Patentanwalt U. Thömen Zeppelinstrasse 5
W-3000 Hannover 1(DE)**

## Beschreibung

Die Erfindung betrifft einen Spannrahmen zum lösbaren Einspannen einer Folie gemäß dem Oberbegriff des Anspruchs 1.

Spannrahmen dieser Gattung werden bei der Verformung von thermoplastischen Folien benötigt, um die Folie während des Bearbeitungsvorganges an den Rändern festzuhalten. Bekannte Verfahren zur Vakuumverformung von thermoplastischen Folien sind in "Modern Plastics Encyclopedia", 1969 - 1970, Seiten 534 - 563 und in der DE-A-3 103 584 bereits ausführlich beschreiben.

Wie die Praxis gezeigt hat, besteht ein wesentlicher Nachteil der bekannten Verfahren zur Vakuumverformung von thermoplastischen Folien darin, daß sich bei niedrigen Verformungstemperaturen in der praktischen Anwendung nicht immer die geforderten Eigenschaften erzielen lassen.

Bei allen Verfahren zur Verformung von thermoplastischen Folien kommt dem Spannrahmen eine wichtige Funktion zu, um die Folie an den Rändern festzuhalten bzw. einzuklemmen, und um so die gewünschte Verformung zu ermöglichen. Um ein Verrutschen der unter Krafteinwirkung stehenden Folie zu vermeiden, ist es erforderlich, eine stabile Rahmenkonstruktion für große Spannkräfte vorzusehen. Diese führt zu aufwendigen und teuren Rahmenanordnungen.

Im Grunde genommen bereitet natürlich die Herstellung einer stabilen Rahmenkonstruktion für große Spannkräfte keine Schwierigkeiten, wenn man den Aufwand und die Kosten vernachlässigt. Es ist aber noch ein weiterer Gesichtspunkt von Bedeutung. Die aufwendige Rahmenkonstruktion erfordert nämlich einen relativ großen Platzbedarf. In der Praxis liegen demgegenüber bei den Vorrichtungen für die Durchführung der Verfahren zum Verformen von Folien beengte Platzverhältnisse zwischen dem Formwerkzeug und dem sogenannten Formkasten bzw. Saugkasten vor. Auf diesen Formkasten wird bei dem zuletzt genannten vorteilhaften Verfahren die von dem Spannrahmen gehaltene Folie gelegt, um anschließend die gewünschte Verformung durchzuführen.

Die beengten Platzverhältnisse wirken sich erschwerend auf eine stabile Rahmenkonstruktion für hohe Spannkräfte aus, da für irgendwelche Schließoder Klemmorgane nur wenig Raum vorhanden ist.

Weiterhin muß berücksichtigt werden, daß bei der Herstellung geformter Kunststoffelemente je nach Wunsch selbstverständlich auch unterschiedlich Folienzuschnitte zur Anwendung kommen. Es müssen deshalb auch unterschiedliche Spannrahmen mit verschiedenen Rahmenflächen zur Verfügung gehalten werden. Da ein einzelner Spannrahmen für sich wegen der oben geschilderten Anforderungen schon sehr aufwendig ist, stellt die Bereithaltung mehrerer Spannrahmen sowohl bezüglich der Lagerhaltung als auch bezüglich der Kosten einen weiteren Nachteil dar. Hinzu kommt noch, daß das Auswechseln der Spannrahmen mit einem nicht unbeachtlichen Arbeitsaufwand verbunden ist und Leerlaufzeiten mit sich bringt.

Durch die US-A-3 659 991 ist ein Spannrahmen bekannt, der zweiteilig mit einem Ober- und Unterteil ausgebildet ist. Zum Einklemmen einer zu verformenden Folie wird das Oberteil um ein das Ober- und Unterteil verbindendes Scharnier auf das Unterteil geklappt. Der bekannte Rahmen ist in seinen Abmessungen nicht veränderbar, so daß es nicht möglich ist, Folien unterschiedlicher Formate einzuspannen. Da die Folie auf dem Unterteil aufliegt, ist ferner ein besonderer Arbeitsgang erforderlich, um die Folie wieder von dem Unterteil zu entfernen.

Durch das Dokument DE-A-2 006 428, von der die Erfindung gemäß dem Oberbegriff des Patentanspruch 1 ausgeht, ist ferner ein Spannrahmen bekannt, der einen Grundrahmen sowie Klemmelemente aufweist.

Dieser bekannte Spannrahmen besitzt keine durchgehenden Klemmleisten. Vielmehr sind eine Vielzahl von im Abstand voneinander angeordneten Klemmvorrichtungen vorgesehen, wobei der Abstand zwischen benachbarten Klemmvorrichtungen veränderbar ist. Dadurch gestaltet sich der Gesamtaufbau des Spannrahmens sehr aufwendig. Durch die einzelnen unabhängig bewegbaren Klemmvorrichtungen soll die Möglichkeit geschaffen werden, eine eingespannte Tafel aus thermoplastischem Material in einer bestimmten Weise ungleichmäßig zu dehnen, um die Wanddicke der Tafel ganz bestimmten Anforderungen einer anschließenden Formung anzupassen und um eine Kompensation der Wärmeausdehnung der zu verformenden Tafel partiell durch Einzelklemmbacken zu erreichen. Eine geschlossene Abdichtung längs der einzelnen Rahmenteile ist bei diesem Spannrahmen nicht möglich.

Der Erfindung liegt die Aufgabe zugrunde, einen Spannrahmen zu schaffen, der bei einfachem Aufbau und bei geschlossener Abdichtung einen leicht zu betätigenden Verschließmechanismus zum Einspannen bei großen Spannkräften aufweist, und zwar unter Berücksichtigung eines geringen Platzbedarfs.

Dieses Ziel erreicht die Erfindung bei dem im Oberbegriff des Patentanspruch 1 angegebenen Spannrahmen durch die Merkmale des kennzeichnenden Teils des Anspruchs 1.

Bei dem neuen Spannrahmen ist es möglich, jeweils zwei Längsrahmenteile und zwei Querrahmenteile vorzusehen, die zusammen die Rahmenfläche begrenzen, wobei die beiden Querrahmenteile lösbar zwischen den Längsrahmenteilen befestigt sind. Dadurch wird der Vorteil geschaffen, im Sinne einer Variabilität des Spannrahmens unterschiedliche Formate der Folie zu erfassen.

Bei einem gewünschten Formatwechsel ist es lediglich erforderlich, die Querrahmenteile zu verschieben und damit den gegenseitigen Abstand der Querrahmenteile zu verändern, wenn bei gleicher Breite des Folienzuschnittes eine andere Länge gewünscht wird. Für den Fall, daß auch eine andere Breite der Folie verlangt wird, können die lösbaren Querrahmenteile durch entsprechend größere oder kleinere Querrahmenteile ersetzt werden. Es ist also nicht erforderlich, für unterschiedliche Folienzuschnitte unterschiedliche einzelne Spannrahmen bereitzuhalten.

Bei dem neuen Spannrahmen sind die Anschlagprofile an der Unterseite des Grundrahmens angeordnet, so daß seitlich eingeführte Stützluft für die Folie alle Folienbereiche erreichen kann, insbesondere auch an den eingespannten Rändern der Folie. Dadurch ist eine gleichmäßige und zuverlässige Kühlung der Folie gewährleistet. Durch die besondere Anordnung der Klemmleisten wird weiterhin erreicht, daß diese sich beim Öffnen aufgrund ihrer Schwerkraft von selbst nach unten verschwenken, wodurch die zuvor eingeklemmte Folie schlagartig freigegeben wird, ohne daß irgendwelche zusätzliche Hilfsvorrichtungen oder Arbeitsvorgänge erforderlich sind. Vielmehr steht die Folie unmittelbar nach dem Öffnen des Grundrahmens für den Transport zu einer weiteren Bearbeitungsstation zur Verfügung, so daß sich bei einer Gesamtanlage kurze Taktzeiten erzielen lassen.

Durch die an der Außenseite jedes Rahmenteils angeordneten, verschwenkbaren und sich über die Länge des Rahmenteils erstreckenden Klemmschenkel wird die Möglichkeit geschaffen, die Folie mit einfachen Maßnahmen unter Verwendung von Verschlußhebeln einzuspannen. Diese Konstruktion gestattet es in vorteilhafter Weise, die Verschlußhebel waagerecht zur Rahmenebene und außerhalb des Rahmens anzuordnen, so daß den Bedingungen beengter Platzverhältnisse Rechnung getragen wird. Im übrigen lassen sich die horizontal angeordneten Verschlußhebel in einfacher Weise von oben durch Preßluftzylinder betätigen, um entweder die Klemmstellung zu arretieren, oder um die Klemmstellung zu lösen.

Die Einwirkung der Preßluftzylinder von oben her hat den Vorteil, daß eine horizontale Bewegung des Spannrahmens nach der Betätigung der Verschlußhebel nicht behindert wird. Der Spannrahmen kann also sofort seitlich verfahren werden. Dieser Umstand wirkt sich besonders günstig auf eine generell angestrebte Automatisierung des gesamten Verarbeitungsprozeßes zur Herstellung der geformten Kunststoffelemente aus, wobei der Spannrahmen mittels eines Fördersystems von der Verformungsposition oberhalb des weiter oben schon genannten Formkastens seitlich in die sogenannte Entformstation (und umgekehrt) verfahren wird.

In zweckmäßiger Ausgestaltung der Erfindung sind die Rahmenteile im Profil U-förmig als Stahlrahmenteile ausgebildet, wobei der untere waagerecht verlaufende Schenkel das Anschlagprofil bildet. Ferner wird das Klemmelement durch einen Klemmwinkel gebildet, dessen unterer Schenkel der Klemmschenkel ist. Diese Konstruktion ermöglicht in Verbindung mit dem Verschlußhebel ohne weiteres die Erzeugung der erforderlichen großen Spannkräfte, und zwar trotz der vorgegebenen beengten Platzverhältnisse zwischen dem Formwerkzeug und dem Formkasten.

Gemäß einer anderen vorteilhaften Weiterbildung der Erfindung besitzt der Spannrahmen eine Innenauskleidung mit hochglanzpolierten Aluminiumblechen. Diese bewirken eine Reflexion der nach außen gerichteten Infrarot-Abstrahlung des für die Erwärmung der Folie vorgesehenen Heizelementes in den Randzonen. Dadurch wird erreicht, daß auch die Randzonen der Folie wie die Folienmitte gleichmäßig erwärmt werden.

Eine andere vorteilhafte Ausgestaltung der Erfindung besteht darin, daß sowohl der Klemmschenkel und das Anschlagprofil als auch der obere Schenkel des Grundrahmens eine Dichtungsfläche besitzen. In der Verformungsposition kann der Spannrahmen insgesamt also wie ein Dichtungselement zwischen dem Formwerkzeug und dem Formkasten wirken, so daß es möglich ist, bei der Verformung mit Vakuum zu arbeiten.

Weitere zweckmäßige Ausgestaltungen der Erfindung sind in den Unteransprüchen angegeben und der Zeichnung zu entnehmen.

Nachfolgend wird die Erfindung zum besseren Verständnis anhand des in der Zeichnung dargestellten Ausführungsbeipiels näher erläutert. Es zeigen:

Fig. 1     eine schematische Querschnittsansicht einer Vorrichtung zum Herstellen eines geformten Kunststoffelementes zur Verdeutlichung der Anwendung eines Spannrahmens,

Fig. 2     eine Draufsicht eines Spannrahmens

Fig. 3     eine Schnittansicht (Draufsicht) einer Halterung für die Befestigung eines Klemmelements an einem Rahmenteil (Schnittlinie II - II in Fig. 4),

Fig. 4     eine Querschnittsansicht der Halterung längs der Schnittlinie I - I,

Fig. 5     eine Seitenansicht eines Verschlußhebels für das Klemmelement in der Offenstellung,

Fig. 6     eine Seitenansicht gemäß Fig. 5, jedoch in der Schließstellung des Klemmelements,

Fig. 7 eine Draufsicht des Verschlußhebels gemäß Fig. 6,

Fig. 8 eine Querschnittsansicht längs der Schnittlinie III - III aus Fig. 7, und

Fig. 9 eine Querschnittsansicht einer Förderketten für den Spannrahmen, mit Führungsschienen und - rollen.

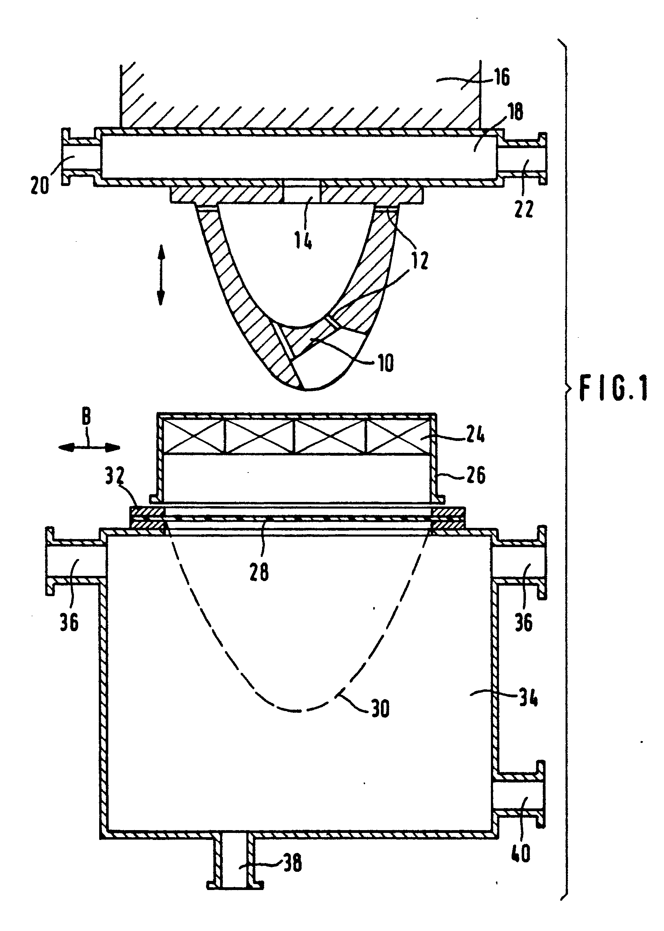

Zur generellen Erläuterung der Verwendung eines Spannrahmens wird nachfolgend zunächst anhand der in Fig. 1 schematisch gezeigten Vorrichtung die Herstellung eines geformten Kunststoffelements näher erläutert. Die Vorrichtung umfaßt ein Formwerkzeug 10 mit mehreren Saugöffnungen 12 und 14. Das Formwerkzeug 10 ist an einem Werkzeugträger 16 befestigt, der über einen hier nicht näher gezeigten Kurbelantrieb vertikal bewegbar ist.

Der Werkzeugträger 16 zur Aufnahme des Formwerkzeuges 10 ist als ein mit Rippen versteifter Kastenträger ausgebildet, dessen Hohlraum 18 über einen Anschluß 20 und über eine flexible Leitung an eine hier nicht dargestellte Hochvakuumanlage angeschlossen werden kann. Ferner mündet der Hohlraum 18 in einen weiteren Anschluß 22 mit einem nicht gezeigten Magnetventil, welches nach dem Verformungsvorgang einen Druckausgleich mit dem Luftdruck der Umgebungsluft ermöglicht.

Unterhalb des Formwerkzeuges 10 ist als Heizquelle ein Infrarotstrahler 24 mit einer seitlichen Abschirmung 26 angeordnet. Durch den Doppelpfeil B ist angedeutet, daß der Infrarotstrahler 24 horizontal verfahrbar ist.

Ein wesentlicher Bestandteil in Fig. 1 ist der Spannrahmen 32, in welchem eine Folie 28 allseitig eingespannt ist. Der Spannrahmen 32 befindet sich in seiner in Fig. 1 dargestellten Position oberhalb eines oben offenen Formkastens (Saugkasten) 34, und der Spannrahmen 32 ist ebenfalls seitlich bzw. horizontal bewegbar.

Der nach oben offene Formkasten 34 besitzt Anschlüsse 36 und 38 für die Stützluft sowie einen weiteren Anschluß 40, über welchen innerhalb des Formkastens 34 ein Vakuum erzeugt werden kann.

Um die in den Spannrahmen 32 eingespannte Folie 28 zu erhitzen, wird der Infrarotstrahler 24 von der Seite her in die gezeigte Position in die Vorrichtung eingefahren. Gleichzeitig wird durch die Anschlüsse 36 Stützluft in den Formkasten 34 geblasen, wobei die Stützluft über die Öffnung 38 ins Freie strömen kann. Die Geschwindigkeit der abströmenden Luft ist dabei ein Maß für den sich im Formkasten 34 einstellenden Überdruck, der die Folie 28 während des Aufheizprozesses trägt.

Die Folie 28 ist derart innerhalb des Spannrahmens 32 eingespannt, daß die Dekorseite von dem Infrarotstrahler 24 abgewandt ist. Es wird also die Folienrückseite durch den Infrarotstrahler 24 erhitzt. Nach Erreichen der gewünschten Verformungstemperatur werden die Anschlüsse 36 und 38 über hier nicht näher dargestellte Ventile geschlossen, und gleichzeitig wird an den Anschluß 40 Vakuum angelegt. Als Folge davon wird die Folie 28 vorverformt und nimmt etwa die mit der Bezugsziffer 30 durch eine gestrichelte Linie gekennzeichnete Lage ein.

Erst jetzt fährt der Infrarotstrahler 24 seitlich in eine Warteposition außerhalb der Tiefziehvorrichtung, und der Werkzeugträger 16 fährt mit dem Formwerkzeug 10 schlagartig in den Formkasten 34 ein. In diesem Augenblick wird an das Formwerkzeug 10 über den Anschluß 20 Hochvakuum angelegt, wobei der andere Anschluß 22 geschlossen bleibt.

Gleichzeitig wird auch der Anschluß 40 geschlossen und der Anschluß 38 geöffnet, so daß sich im Formkasten 34 der Luftdruck der Umgebungsluft einstellt, der die Folie 28 konturentreu an das Formwerkzeug 10 andrückt.

Nach einer Abkühlzeit von etwa 30 Sekunden wird der Anschluß 20 geschlossen und der Anschluß 22 geöffnet, so daß sich im Formwerkzeug 10 wieder der Umgebungsluftdruck einstellt. Jetzt wird das Formwerkzeug 10 wieder nach oben außerhalb des Formkastens 34 in die in Fig. 1 gezeigte Position gefahren. Der Spannrahmen 32 wird ebenfalls seitlich zu einer Entformstation verfahren, und nun kann dem Spannrahmen 32 die fertig geformte Tiefziehfolie entnommen werden.

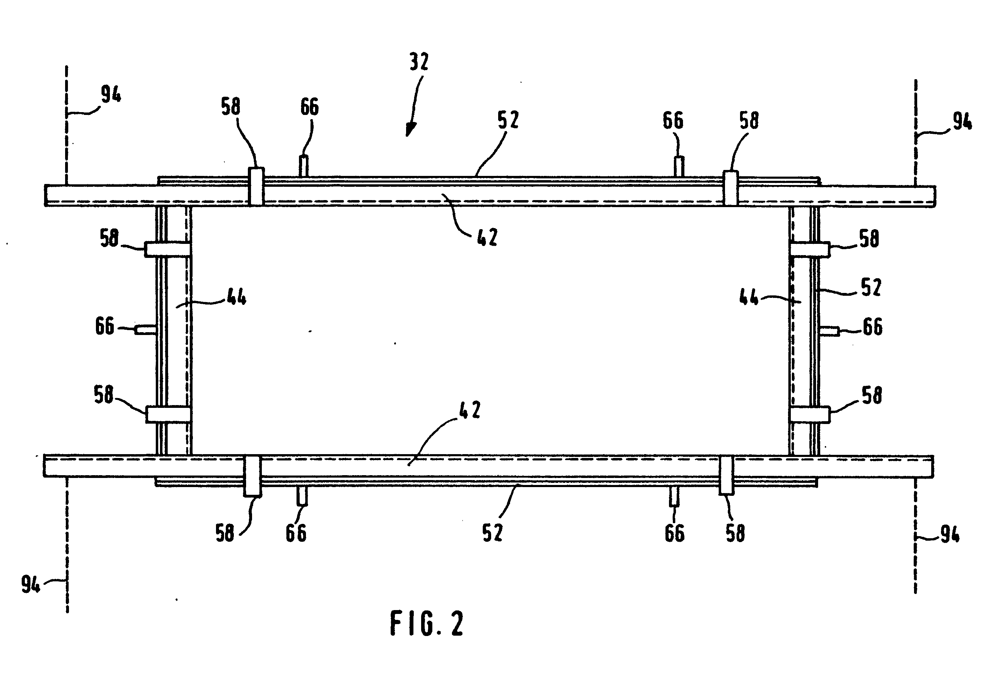

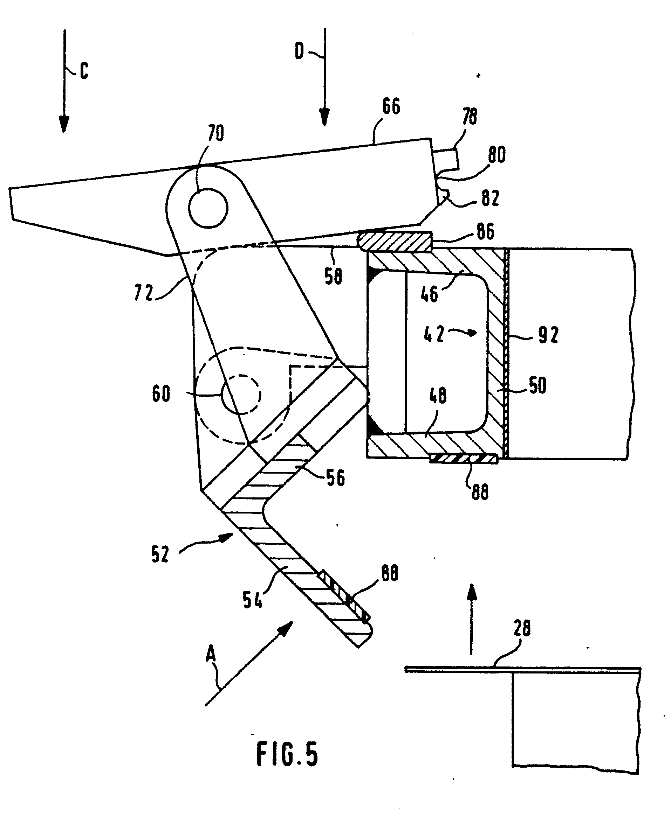

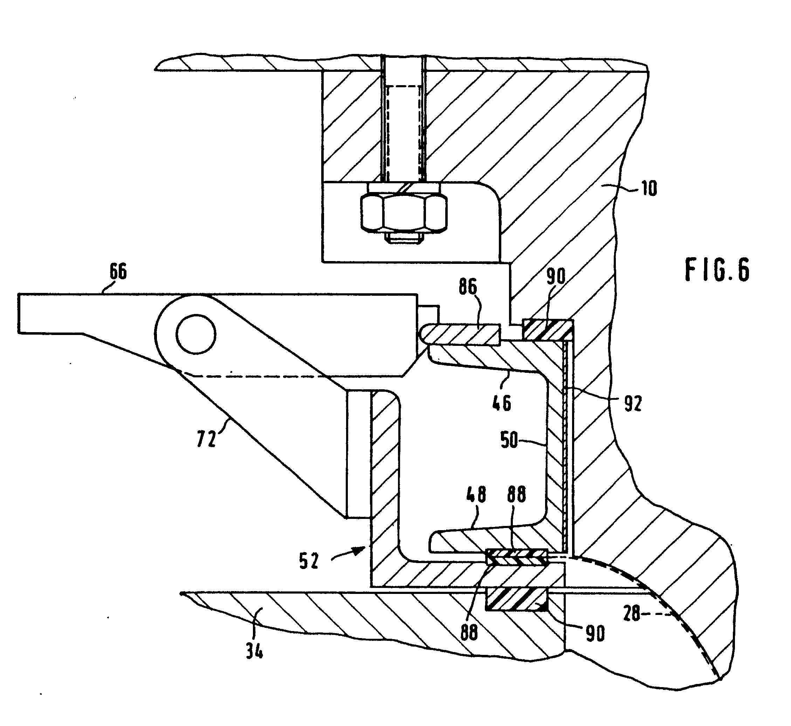

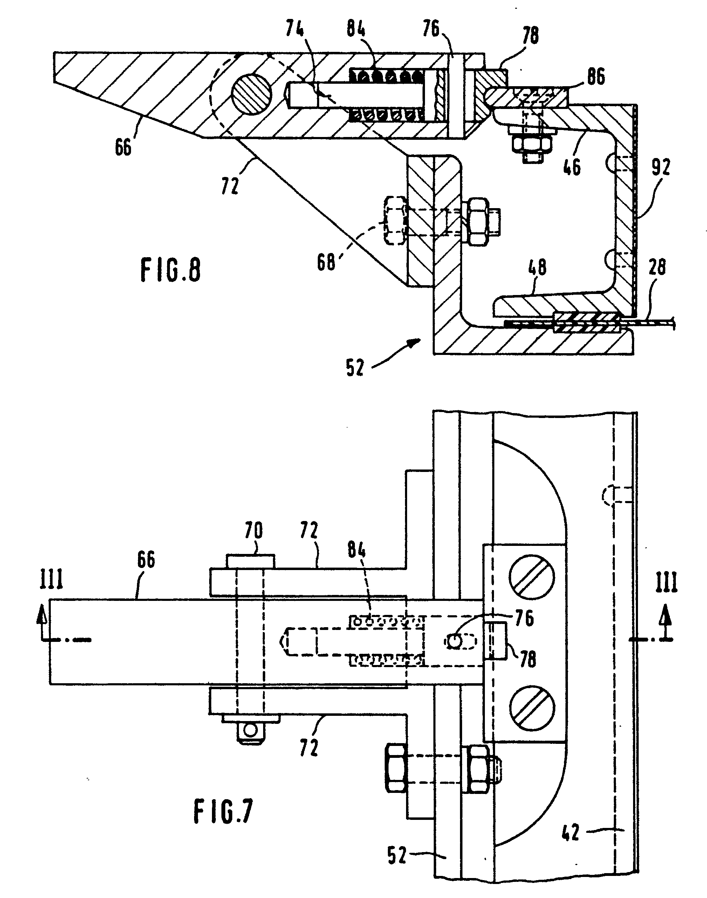

Der nähere Aufbau des in Fig. 1 nur schematisch gezeigten Spannrahmens ergibt sich aus Fig. 2 - 8. Wie die Draufsicht in Fig. 2 zeigt, besteht der Spannrahmen 32 aus zwei Längsrahmenteilen 42, zwischen denen sich zwei Querrahmenteile 44 erstrecken. An der Außenseite jedes Längsrahmenteils 42 und Querrahmenteils 44 erstreckt sich ein verschwenkbar angeordnetes und winkelförmig gestaltetes Klemmelement 52 mit jeweils einem einen Klemmschenkel 54 bildenden unteren Schenkel und einem oberen Schenkel 56 (vgl. Fig. 5). Wie in Fig. 6 zu erkennen ist, sind die Längs- und Querrahmenteile im Profil U-förmig mit einem oberen Schenkel 46, einem unteren als Anschlagprofil wirkenden Schenkel 48 sowie mit einem senkrechten Schenkel 50 ausgebildet.

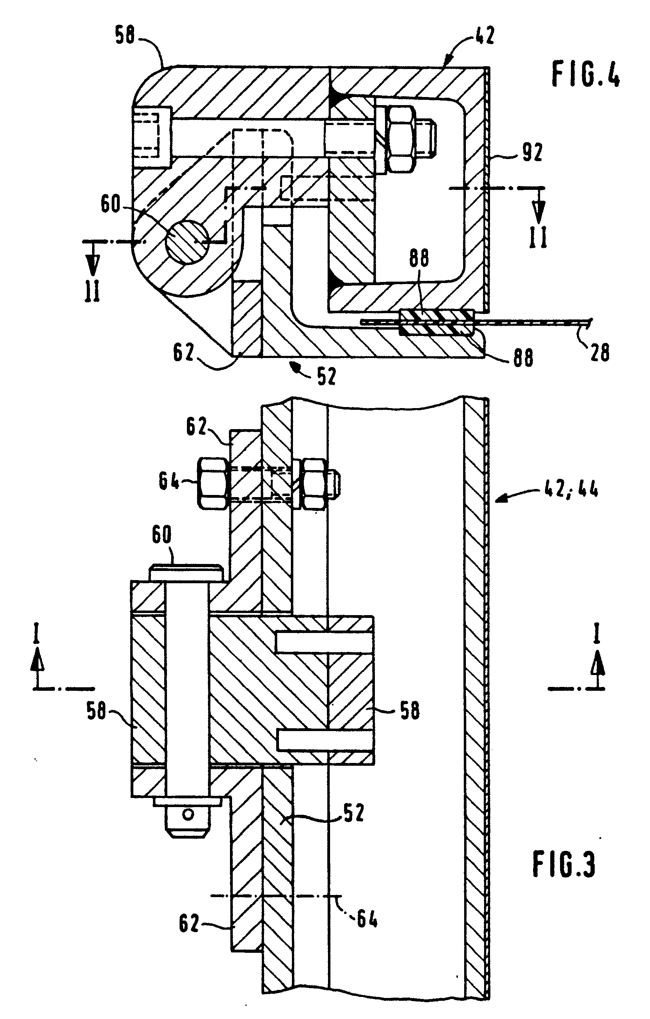

Die Klemmwinkel 52 sind mittels nach Art eines Kipplagers ausgebildete Halterungen 58 an den Längsrahmenteilen 42 bzw. den Querrahmenteilen 44 befestigt bzw. aufgehängt. Jede Halterung 58 umfaßt gemäß Fig. 3 und 4 eine von Winkelstücken 62 getragene Achse 60, an welcher der Klemmwinkel 52 verschwenkbar aufgehängt ist. Die Winkelstücke 62 sind mittels Schraubverbindungen 64 befestigt.

An den Längsrahmenteilen 42 und den Querrahmenteilen 44 des Spannrahmens 32 sind außerdem im Abstand von den Halterungen 58 Verschlußhebel 66 vorgesehen, deren Aufbau sich aus Fig. 5 - 8 ergibt. Der Verschlußhebel 66 ist um einen Bolzen 70 verschwenkbar zwischen zwei Trägerschenkeln 72 angeordnet, welche mit den Klemmschenkeln 52 verbunden sind und den Bolzen 70 tragen.

Die Befestigung der beiden den Verschlußhebel 66 über den Bolzen 70 tragenden Trägerschenkel 72 an dem oberen Schenkel 56 des Klemmwinkels 52 erfolgt mittels Schraubverbindungen 68. Wie in der Draufsicht gemäß Fig. 2 zu erkennen ist, sind bei den Längsrahmenteilen 52 jeweils zwei Verschlußhebel 66 vorgesehen, während bei den kürzeren Querrahmenteilen 44 nur jeweils ein Verschlußhebel angeordnet ist.

Fig. 5 zeigt den Klemmwinkel 52 in seiner geöffneten Stellung, während Fig. 6 - 8 den Klemmwinkel 52 in seiner geschlossenen Klemmstellung darstellen. Ausgehend von Fig. 5 wird die Folie 28 nach oben in Anlage mit einer Dichtungsfläche 88 am unteren Schenkel 48 (Anschlagprofil) gebracht. Auf der Innenseite des unteren Schenkels 54 befindet sich ebenfalls eine Dichtungsfläche 88.

Nachdem die Folie 28 an der oberen Dichtungsfläche 88 anliegt, werden die vier Klemmwinkel 52 mittels nicht dargestellter Preßluftzylinder an die Längsrahmenteile 42 bzw. Querrahmenteile 44 gedrückt, um den Spannrahmen 32 zu schließen. Die Einwirkung der Preßluftzylinder ist in Fig. 5 durch den Pfeil A angedeutet.

Nach der Einwirkung auf den unteren Klemmschenkel 54 in Richtung des Pfeiles A nimmt der mit dem Klemmwinkel 52 verbundene Verschlußhebel 66 aufgrund einer in Fig. 5 nach links gerichteten Bewegung eine Position ein, in welcher er mit seiner am Kopfende befindlichen Fase 82 vor einer gehärteten Arretierungsleiste 86 liegt, die auf den oberen Schenkeln 46 der Längsrahmenteile 42 und der Querrahmenteile 44 angeordnet ist.

Nach Erreichen dieser Stellung wird jeder Verschlußhebel 66 nun durch weitere nicht dargestellte Preßluftzylinder in Richtung des Pfeiles D nach unten gedrückt, so daß die Verschlußhebel 66 einrasten, womit die Folie 28 maßgerecht und fest in dem Spannrahmen 32 eingespannt ist. Damit ist der zweiteilige Schließvorgang beendet. Die erwähnten Preßluftzylinder werden in ihre Ausgangsstellung zurückgefahren, und der Spannrahmen 32 wird mit Hilfe einer Förderkette mit Führungsrollen in die Arbeitsposition (vgl. Fig. 1) verfahren. Bevor hier das Formwerkzeug 10 heruntergefahren wird, wird zunächst die Folie 28 mittels der Infrarotstrahler 24 oberhalb des Formkastens 34 erwärmt.

Die auf der Innenseite des Spannrahmens 32 an den senkrechten Schenkeln 50 befestigten hochglanzpolierten Aluminiumbleche 92 haben die Aufgabe, die Randabstrahlung zu verhindern, damit auch die Randzonen der Folie 28 wie die Folienmitte gleichmäßig erwärmt werden.

Das den endgültigen Schließvorgang der Klemmwinkel 52 bewirkende Einrasten der Verschlußhebel 66 wird durch einen innerhalb des Verschlußhebels 66 befindlichen Schließbolzen 74 ermöglicht, dessen Kopf 78 mit einer der Kante der Arretierungsleiste 86 angepaßten Aussparung 80 versehen ist. Beim Einrasten wird der Schließbolzen 74 entgegen der Kraft einer ebenfalls innerhalb des Verschlußhebels 66 befindlichen Feder 84 gedrückt, die den Schließbolzen 74 mit dem Kopf 78 gegen die Arretierungsleiste 86 drückt und somit die Schließstellung des Verschlußhebels 66 sichert. Die horizontale Bewegung des Schließbolzens 74 wird durch einen Stift 76 begrenzt, der innerhalb eines Langloches geführt ist.

Nachdem der so geschlossene Spannrahmen 32 mit der Folie 28 in die voranstehend geschilderte Arbeitsposition verfahren ist, und nachdem die Folie 28 mittels der Infrarotstrahler 24 erwärmt worden ist, wird am Formkasten 34 Vakuum zur Vorformung angelegt. Danach fährt das Formwerkzeug 10 in den Formkasten 34 ein. In diesem Augenblick wird am Formwerkzeug zur Endverformung Vakuum angelegt und im Formkasten 34 ein Überdruck erzeugt. Der Spannrahmen 32 wirkt also praktisch als ein Dichtelement zwischen dem Formwerkzeug 10 und dem Formkasten 34. Um einen besonders dichten Abschluß zu erzielen, sind gemäß Fig. 6 Dichtungen 90 aus Schaumgummi vorgesehen.

Nach der Endverformung fährt das Formwerkzeug 10 wieder nach oben, und der Spannrahmen 32 wird seitlich in die Entformstation verfahren, nachdem sich der Formkasten 34 geöffnet hat. In der Entformstation wird der Spannrahmen 32 wieder geöffnet.

Zum Öffnen des Spannrahmens 32 werden die Verschlußhebel 66 gemäß Fig. 5 am äußeren Ende durch Preßluftzylinder nach unten gedrückt, was durch den Pfeil C angedeutet ist. Die Rastverbindung zwischen dem Kopf 78 und der Arretierungsleiste 86 löst sich dabei, so daß sich die Klemmwinkel 55 öffnen und dabei die in Fig. 5 gezeigte Position einnehmen. Das Formteil fällt nach unten und kann danach weiterverarbeitet werden.

Der neue Spannrahmen 32 ist auf einfache Weise für verschiedene Formate von Folienzuschnitten umrüstbar. Bei gleicher Breite des Folienzuschnittes jedoch bei geänderter Länge brauchen lediglich die Querrahmenteile 44 an den Stirnseiten entsprechend verschoben zu werden. Wenn sich dagegen die Zuschnittbreite ändert, werden die Querrahmenteile (mit den entsprechenden Klemmwinkeln) durch andere ersetzt.

Der Spannrahmen 32 mit dem unteren Klemmschenken 54 schafft in vorteilhafter Weise die Möglichkeit, die unten liegende, thermisch empfindliche Dekorseite der Folie 28 mittels Stützluft zu kühlen. Der Folienzuschnitt liegt wegen des U-förmigen Profils des Spannrahmens und wegen des unteren Klemmschenkels 54 nämlich tief im Rahmen, damit die Kühlung gleichmäßig über die Fläche einwirken kann. Dadurch werden Totzonen vermieden.

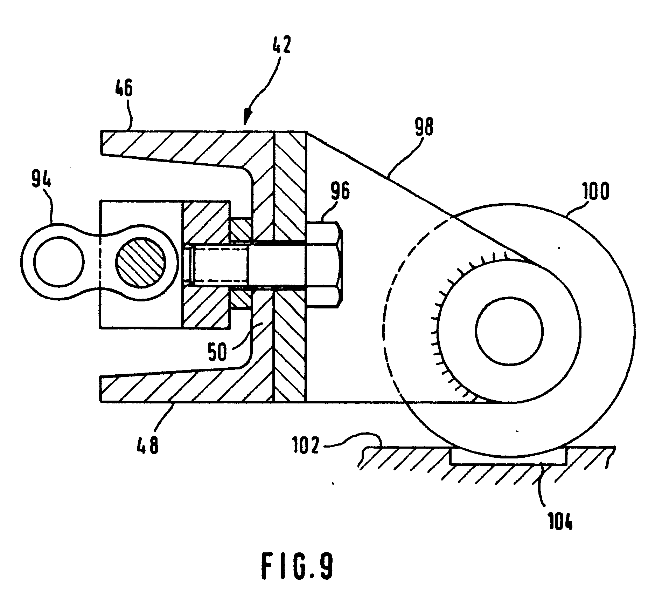

Zum Verfahren des Spannrahmens 32 ist gemäß Fig. 9 ein Fördersystem mit einer Förderkette 94 vorgesehen (die einzelnen Förderketten sind bereits in Fig. 2 angedeutet, wo zu erkennen ist, daß die Förderketten 94 außerhalb des eigentlichen Spannrahmens 32 an den Enden der Längsrahmenteile 42 angreifen).

Die Förderketten 94 sind über Schraubverbindungen 96 an den Längsrahmenteilen 42 befestigt, die außerdem über Winkel 98 mit Führungsrollen 100 verbunden sind.

Für das Verfahren des Spannrahmens 32 mit Hilfe der Förderketten 94 sind Führungsschienen 102 vorgesehen, auf denen die Führungsrollen 100 gleiten. Bei Erreichen der Verformungsposition gelangen die Führungsrollen in an den entsprechenden Stellen in den Führungsschienen 102 vorgesehene Vertiefungen 104, so daß sich der Spannrahmen 32 absenkt und die Dichtflächen sozusagen automatisch auf Grund des Eigengewichtes des Spannrahmens 32 zur Anlage kommen.

**Patentansprüche**

1. Spannrahmen zum lösbaren Einspannen einer Folie zum Zwecke der Herstellung eines geformten Kunststoffelements, wobei der Spannrahmen einen Grundrahmen (32) sowie Klemmelemente (52) besitzt, dadurch gekennzeichnet, daß der Grundrahmen (32) ein aus Rahmenteilen (42, 44) zusammengesetzter Grundrahmen (32) mit einem an der Unterseite des Grundrahmens (32) angeordneten Anschlagprofil (48) ist, daß die verschwenkbar ausgebildeten Klemmelemente (52) je an der Außenseite jedes Rahmenteils (42, 44) angeordnet sind und sich mit einem Klemmschenkel (54) über die Länge des jeweiligen Rahmenteils (42, 44) erstrecken, und daß die Klemmschenkel (54) mittels zugeordneter Verschlußhebel (66) in eine lösbare Klemmstellung bringbar sind, in welcher die Klemmschenkel (54) unter Krafteinwirkung gegen die Anschlagprofile (48) der Rahmenteile (42, 44) drücken.

2. Spannrahmen nach Anspruch 1, dadurch gekennzeichnet, daß die Rahmenteile (42, 44) des Grundrahmens im Profil U-förmig ausgebildete Stahlrahmenteile sind, und daß der untere waagerechte verlaufende Schenkel das Anschlagprofil (48) bildet.

3. Spannrahmen nach Anspruch 1 und/oder 2, dadurch gekennzeichnet, daß jeweils zwei Längsrahmenteile (42) und zwei Querrahmenteile (44) vorgesehen sind, die ein Viereck, insbesondere Rechteck, bilden, und daß die Querrahmenteile (44) lösbar zwischen den Längsrahmenteilen (42) befestigt sind, so daß der gegenseitige Abstand der Querrahmenteile (44) voneinander veränderbar ist.

4. Spannrahmen nach einem der vorhergehenden Ansprüche 1 - 3, dadurch gekennzeichnet, daß die Klemmelemente (52) jeweils durch einen Klemmwinkel mit zwei rechtwinklig zueinander angeordneten Schenkeln (54, 56) gebildet sind, von denen der untere Schenkel den Klemmschenkel (54) bildet.

5. Spannrahmen nach einem der vorhergehenden Ansprüche 1 - 4, dadurch gekennzeichnet, daß die Klemmelemente (52) mittels Halterungen (58) an den Rahmenteilen (42, 44) befestigt sind, und daß die Halterung (58) eine Achse (60) besitzt, an denen die Klemmelemente (52) verschwenkbar aufgehängt sind.

6. Spannrahmen nach Anspruch 5, dadurch gekennzeichnet, daß die Achse (60) im Abstand von den Rahmenteilen (42, 44) angeordnet ist, so daß die Klemmelemente (52) aufgrund ihrer Schwerkraft eine Ruhestellung einnehmen, in welcher sich das Anschlagprofil (48) des Grundrahmens und der Klemmschenkel (54) im Abstand voneinander befinden.

7. Spannrahmen nach einem der vorhergehenden Ansprüche 1 - 6, dadurch gekennzeichnet, daß jedes Klemmelement (52) mindestens einen oberhalb des Klemmelements (52) verschwenkbar gelagerten Verschlußhebel (66) besitzt, durch welchen das Klemmelement (52) in seiner Klemmstellung arretierbar ist.

8. Spannrahmen nach Anspruch 7, dadurch gekennzeichnet, daß an dem oberen Schenkel (56) des Klemmwinkels (52) ein Hebelträger (68) befestigt ist, an dessen dem Klemmwinkel (52) abgewandten Ende ein Bolzen (70) angeordnet ist, der den Verschlußhebel (66) trägt.

9. Spannrahmen nach Anspruch 8, dadurch gekennzeichnet, daß der Hebelträger (68) zwei im Abstand parallel zueinander verlaufende Trägerschenkel (72) umfaßt, zwischen denen sich der Verschlußhebel (66) erstreckt.

**10.** Spannrahmen nach einem der vorhergehenden Ansprüche 7 - 9, dadurch gekennzeichnet, daß der Verschlußhebel (66) an seinem vorderen, dem Rahmenteil (42, 44) zugewandten Ende einen Schließbolzen (74) besitzt, dessen Kopf (78) mit einer Aussparung (80) versehen ist.

**11.** Spannrahmen nach Anspruch 10, dadurch gekennzeichnet, daß der Schließbolzen (74) mit Ausnahme seines Kopfes (78) innerhalb des Verschlußhebels (66) gelagert ist, und unter der Einwirkung der Kraft einer Feder (84) steht, die einer Bewegung des Schließbolzens (74) nach hinten entgegenwirkt.

**12.** Spannrahmen nach Anspruch 10 und/oder 11, dadurch gekennzeichnet, daß an dem oberen waagerecht verlaufenden Schenkel (46) des U-förmigen Rahmenteils eine sich über das Ende des Schenkel (46) hinaus erstreckende, gehärtete Arretierungsleiste (86) befestigt ist, die in Eingriff mit der Aussparung (80) des Schließbolzens (74) bringbar ist.

**13.** Spannrahmen nach einem der vorhergehenden Ansprüch 7 - 12, dadurch gekennzeichnet, daß sich der Verschlußhebel (66) in seiner Arretierstellung (Klemmstellung) waagerecht parallel zur Ebene des Spannrahmens erstreckt.

**14.** Spannrahmen nach einem der vorhergehenden Ansprüche 1 - 13, dadurch gekennzeichnet, daß der Klemmschenkel (54) und der zugeordnete untere, das Anschlagprofil bildende Schenkel (48) des Rahmenteils an ihren benachbarten Seiten mit Dichtungsflächen (88) versehen sind.

**15.** Spannrahmen nach einem der vorhergehenden Ansprüche 1 - 14, dadurch gekennzeichnet, daß an der Außenseite des oberen Schenkels (46) des Rahmenteils an der der Arretierungsleiste (86) gegenüberliegenden Seite eine Dichtung (90) vorgesehen ist.

**16.** Spannrahmen nach einem der vorhergehenden Ansprüche 1 - 15, dadurch gekennzeichnet, daß der senkrechte Schenkel (50) des U-förmigen Grundrahmens auf seiner Rahmeninnenseite mit hochglanzpoliertem Aluminiumblech (92) versehen ist.

**17.** Spannrahmen nach einem der vorhergehenden Ansprüche 1 - 16, dadurch gekennzeichnet, daß die äußeren Enden der die Rahmenlängsseiten bildenden Rahmenteile (42) mit einem Förderkettensystem (94) zur Bewegung des Spannrahmens (32) verbunden sind.

**18.** Spannrahmen nach Anspruch 17, dadurch gekennzeichnet, daß der Spannrahmen (32) mittels des Förderkettensystems (94) auf Führungsschienen (102) unter Verwendung von Führungsrollen (100) verfahrbar ist, und daß in den Führungsschienen (102) Vertiefungen (104) vorgesehen sind, in welche die Führungsrollen (100) in der Verformungsposition einrasten, wodurch der Spannrahmen (32) abgesenkt wird und die Dichtungsflächen zur Anlage kommen.

**Claims**

**1.** Clamping frame for releasably clamping a sheet for the purpose of making a moulded plastics element, wherein the clamping frame possesses a base frame (32) and clamping elements (52), characterized in that the base frame (32) is a base frame (32) assembled from frame components (42, 44) having an abutment profile (48) on the lower face of the base frame (32), that the pivotally constructed clamping elements (52) are disposed one each on the outer side of each frame component (42, 44) and extend with a clamping flange (54) over the length of the relevant frame component (42, 44), and that the clamping flanges (54) can be brought, by means of associated closure levers (66), into a releasable clamping position, in which the clamping flanges (54) press with force action against the abutment profiles (48) of the frame components (42, 44).

**2.** Clamping frame according to Claim 1, characterized in that the frame components (42, 44) of the base frame are steel frame components constructed with a U-shaped profile, and that the lower, horizontal flange forms the abutment profile (48).

**3.** Clamping frame according to Claim 1 and/or 2, characterized in that two longitudinal frame components (42) and two transverse frame components (44) are each provided, which constitute a quadrilateral, especially a rectangle, and that the transverse frame components (44) are releasably fixed between the longitudinal frame components (42), so that the spacing of the transverse frame components (44) from each other can be varied.

**4.** Clamping frame according to one of the preceding Claims 1 to 3, characterized in that the clamping elements (52) are each formed of a clamping angle having two flanges (54, 56) disposed perpendicularly to each other, of which the lower flange forms the clamping flange (54).

5. Clamping frame according to one of the preceding Claims 1 to 4, characterized in that the clamping elements (52) are attached to the frame components (42, 44) by means of mounting supports (58), and that the mounting support (58) has an axis (60), from which the clamping elements (52) are pivotally suspended.

6. Clamping frame according to Claim 5, characterized in that the axis (60) is disposed at a distance from the frame components (42, 44), so that the clamping elements (52) adopt an at-rest position due to gravity, in which the abutment profile (48) of the base frame and the clamping flange (54) are at a distance from each other.

7. Clamping frame according to one of the preceding Claims 1 to 6, characterized in that each clamping element (52) possesses at least one closure lever (66), pivotally journalled above the clamping element (52), by which the clamping element (52) can be locked in its clamping position.

8. Clamping frame according to Claim 7, characterized in that a lever support (68) is fixed to the upper flange (56) of the clamping angle (52), at the end of which support remote from the clamping angle (52) a pin (70) is disposed, which carries the closure lever (66).

9. Clamping frame according to Claim 8, characterized in that the lever support (68) comprises two support arms (72), extending parallel and spaced apart from each other, between which the closure lever (66) extends.

10. Clamping frame according to one of the preceding Claims 7 to 9, characterized in that the closure lever (66) possesses, at its front end towards the frame component (42, 44), a locking bolt (74), the head (78) of which is provided with a recess (80).

11. Clamping frame according to Claim 10, characterized in that the locking bolt (74) is housed, with the exception of its head (78), inside the closure lever (66) and is subject to the action of the force of a spring (84), which opposes a movement of the locking bolt (74) backwards.

12. Clamping frame according to Claim 10 and/or 11, characterized in that, on the upper, horizontally extending flange (46) of the U-section frame component, a hardened blocking strip (86) extending beyond the end of the flange (46) is secured, which can be brought into engagement with the recess (80) of the locking bolt (74).

13. Clamping frame according to one of the preceding Claims 7 to 12, characterized in that the closure lever (66), when in its blocking position (clamping position), extends horizontally parallel to the plane of the clamping frame.

14. Clamping frame according to one of the preceding Claims 1 to 13, characterized in that the clamping flange (54) and the associated, lower flange (48) of the frame component constituting the abutment profile are provided, at their adjacent sides, with sealing surfaces (88).

15. Clamping frame according to one of the preceding Claims 1 to 14, characterized in that a seal (90) is provided on the outer side of the upper flange (46) of the frame component, at the side opposite to the blocking plate (86).

16. Clamping frame according to one of the preceding Claims 1 to 15, characterized in that the vertical web (50) of the U-section base frame is provided, on its frame inner face, with highly polished aluminium sheet (92).

17. Clamping frame according to one of the preceding Claims 1 to 16, characterized in that the outer ends of the frame components (42) forming the frame longitudinal sides are connected to a conveyor chain system (94) for moving the clamping frame (32).

18. Clamping frame according to Claim 17, characterized in that the clamping frame (32) can be traversed by means of the conveyor chain system (94) on guide rails (102) by the use of guide rollers (100), and that depressions (104) are provided in the guide rails (102), into which depressions the guide rollers (100) engage in the moulding position, with the result that the clamping flame (32) is lowered and the sealing surfaces come into bearing.

**Revendications**

1. Cadre de fixation desserrable pour le blocage d'une feuille, servant à la fabrication d'un élément monté en matière plastique, le cadre de fixation comprenant un cadre de base ainsi que des éléments de serrage (52), caractérisé en ce que le cadre de base (32) est un cadre de base (32) composé de parties de cadre (42, 44) avec un profil de butée (48), disposé sur la face inférieure du cadre du base (32), en ce que les éléments de serrage (52) conçus orientables sont respectivement disposés sur la face externe de chaque partie de cadre (42, 44) et s'étendent avec une branche de serrage (54) sur la longueur de la partie de cadre respective (42, 44), et en ce que les branches de serrage (54) peuvent, au moyen de leviers de verrouillage affectés (66), être mises en une position de desserrage, dans laquelle les branches de serrage (54) appuient, sous l'action de la force contre les profils de butée (48) des parties de cadre (42, 44).

2. Cadre de fixation suivant la revendication 1 caractérisé en ce que les parties de cadre (42, 44) du cadre de base sont en acier avec un profil en U et en ce que la branche inférieure horizontale forme le profil de butée (48).

3. Cadre de fixation suivant la revendication 1 et/ou 2, caractérisé en ce que sont prévues respectivement deux parties de cadre longitudinales (42) et deux parties de cadre transversales (44) qui forment un quadrilatère, notamment un rectangle, et en ce que les parties de cadre transversales (44) sont fixées de manière amovible entre les parties de cadre longitudinales (42), de manière que la distance mutuelle entre les parties de cadre transversales (44) soit réglable.

4. Cadre de fixation suivant une des revendications précédentes 1 à 3, caractérisé en ce que les éléments de serrage (52) sont respectivement formés par une équerre de serrage avec deux branches (54, 56) disposées à angle droit, la branche inférieure étant la branche de serrage (54).

5. Cadre de fixation suivant une des revendications précédentes 1 à 4, caractérisé en ce que les éléments de serrage (52) sont fixés aux parties de cadre (42, 44) au moyen de fixations (58) et que la fixation (58) a un axe (60) sur lequel les éléments de serrage (52) sont suspendus de manière orientable.

6. Cadre de fixation suivant la revendication 5, caractérisé en ce que l'axe (60) est à l'écart des parties de cadre (42, 44), de manière que les éléments de serrage (52) adoptent, en raison de leur poids, une position de repos dans laquelle le profil de butée (48) du cadre de base et la branche de serrage (54) se trouvent écartés l'un de l'autre.

7. Cadre de fixation suivant une des revendications précédentes 1 à 6, caractérisé en ce que chaque élément de serrage (52) possède au moins un levier de verrouillage monté orientable au-dessus de l'élément de serrage (52), par lequel l'élément de serrage (52) peut être arrêté dans sa position de serrage.

8. Cadre de fixation suivant la revendication 7, caractérisé en ce qu'un support de levier (68) est fixé à la branche supérieure (56) de l'équerre de serrage (52), sur l'extrémité opposée à laquelle est disposé un boulon (70) qui porte le levier de verrouillage (66).

9. Cadre de fixation suivant la revendication 8, caractérisé en ce que le support de levier (68) comprend deux branches porteuses (72) parallèles à distance l'une de l'autre entre lesquelles se trouve le levier de verrouillage (66).

10. Cadre de fixation suivant une des revendications précédentes 7 à 9, caractérisé en ce que le levier de verrouillage (66) possède, sur son extrémité avant tournée vers la partie de cadre (42, 44), un boulon de verrouillage (74) dont la tête (78) est pourvue d'un évidement (80).

11. Cadre de fixation suivant la revendication 10, caractérisé en ce que le boulon de verrouillage (74) est, à l'exception de sa tête (78), monté à l'intérieur du levier de verrouillage (66) et se trouve sous l'action de la force d'un ressort (84), agissant contre un mouvement vers l'arrière du boulon de verrouillage (74).

12. Cadre de fixation suivant la revendication 10 et/ou 11, caractérisé en ce que, sur la branche supérieure (46), horizontale de la partie de cadre en U, est fixée une baguette d'arrêt durcie (86), allant audelà de l'extrémité de la branche (46) et pouvant être mise en prise avec l'évidement (80) du boulon de verrouillage (74).

13. Cadre de fixation suivant une des revendications précédentes 7 à 12, caractérisé en ce que, dans sa position d'arrêt (position de serrage), le levier de verrouillage (66) est horizontal et parallèle au plan du cadre de fixation.

14. Cadre de fixation suivant une des revendications précédentes 1 à 13, caractérisé en ce que la branche de serrage (54) et la branche inférieure (48) du cadre de fixation qui lui est associée et qui forme le profil de butée, sont pourvues de surfaces d'étanchéité (88) sur leurs faces latérales voisines.

15. Cadre de fixation suivant une des revendications précédentes 1 à 14, caractérisé en ce qu'une garniture d'étanchéité est prévue sur le côté opposé à la baguette d'arrêt (86) de la face extérieure de la branche supérieure (46) de la partie de cadre.

16. Cadre de fixation suivant une des revendications précédentes 1 à 15, caractérisé en ce que la branche verticale (50) du cadre de base en U est pourvue, sur la face interne du cadre, de tôle d'aluminium polie spéculaire (92).

17. Cadre de fixation suivant une des revendications précédentes 1 à 16, caractérisé en ce que les extrémités extérieures des parties de cadre (42), formant les grands côtés du cadre, sont reliées à un système de transport à chaînes (94) pour le mouvement du cadre de fixation (32).

18. Cadre de fixation suivant la revendication 17, caractérisé en ce que le cadre de fixation (32) est déplaçable, sur des glissières de guidage (102), au moyen du système de transport à chaînes (94), en utilisant des galets de guidage (100), et en ce que, dans les glissières de guidage (102), sont prévus des creux dans lesquels, en position de déformation, les galets de guidage (100) s'enclenchent, de manière que le cadre de fixation (32) soit abaissé et que les surfaces d'étanchéité soient en contact.

**FIG.1**

FIG. 2

EP 0 251 989 B1

FIG.4

FIG.3

FIG.5

FIG.6

EP 0 251 989 B1

FIG.8

FIG.7

16

FIG.9